# EUROPÄISCHE PATENTSCHRIFT

(11) **EP 1 502 084 B1**
(45) Veröffentlichungstag und Bekanntmachung des Hinweises auf die Patenterteilung: **15.01.2020**
(21) Anmeldenummer: 03725163.4
(22) Anmeldetag: 07.05.2003
(51) Int. Cl.: G01F 1/84, G01N 9/00, G01N 11/02, G01N 11/16

(54) **TORSIONSCHWINGUNGS-TILGER FÜR EINEN MESSWANDLER VOM VIBRATIONSTYP**
TORSIONAL OSCILLATION DAMPER FOR A VIBRATING MEASURING TRANSFORMER
AMORTISSEUR D'OSCILLATIONS DE TORSION POUR TRANSFORMATEUR DE MESURE DE TYPE VIBRANT

(30) Priorität: 08.05.2002 DE 10220827; 03.07.2002 US 393116 P; 01.08.2002 DE 10235322; 02.08.2002 US 400047 P
(43) Veröffentlichungstag der Anmeldung: 02.02.2005
(73) Patentinhaber: Endress + Hauser Flowtec AG, 4153 Reinach BL 1 (CH)
(72) Erfinder: DRAHM, Wolfgang, 85435 Erding (DE); RIEDER, Alfred, 84034 Landshut (DE)
(74) Vertreter: Andres, Angelika Maria
(86) Internationale Anmeldenummer: PCT/EP2003/004777
(87) Internationale Veröffentlichungsnummer: WO 2003/095949

(56) Entgegenhaltungen:
- EP-A- 0 521 439
- EP-A- 1 154 254
- EP-A- 1 260 798
- US-A1- 2002 174 730

## Beschreibung

Die Erfindung betrifft einen, insb. für eine Verwendung in einem Viskositätsmesser, einem Viskositäts-/Dichtemesser oder einem Viskositäts-/ Massendurchflußmesser geeigneten, Meßwandler vom Vibrationstyp.

Zur Ermittlung einer Viskosität einer in einer Rohrleitung strömenden Flüssigkeit werden oftmals solche Meßgeräte verwendet, die mittels eines wenigstens ein mit der Rohrleitung kommunizierendes Meßrohr umfassenden Meßwandlers vom Vibrationstyp und einer daran angeschlossener Steuer- und Auswerteelektronik, im Fluid Scher- oder auch Reibungskräfte bewirken und von diesen abgeleitet ein die Viskosität repräsentierendes Meßsignal erzeugen.

So sind z.B. in der US-A 45 24 610, der US-A 52 53 533, der US-A 60 06 609 oder der EP-A 1 158 289 In-Line-Viskositätsmesser - also in den Verlauf einer fluidführenden Rohrleitung einsetzbare Viskositätsmesser - mit jeweils einem Meßwandler vom Vibrationstyp beschrieben, welcher Meßwandler auf eine Viskosität eines in einer Rohrleitung strömenden Fluids reagiert und welcher Meßwandler umfaßt:
- ein einziges gerades, im Betrieb vibrierendes Meßrohr zum Führen des Fluids, welches Meßrohr über ein einlaßseitig einmündendes Einlaßrohrstück und über ein auslaßseitig einmündendes Auslaßrohrstück mit der Rohrleitung kommuniziert, sowie
- eine Erregeranordnung, die das Meßrohr im Betrieb zumindest anteilig zu Torsionsschwingungen um eine mit dem Meßrohr fluchtende Schwingungsachse anregt
- eine Sensoranordnung zum örtlichen Erfassen von Vibrationen des Meßrohrs.

Gerade Meßrohre bewirken bekanntlich, zu Torsionsschwingungen um eine mit dem Meßrohr fluchtende Schwingungsachse angeregt, daß im hindurchgeführten Fluid Scherkräfte erzeugt werden, wodurch wiederum den Torsionsschwingungen Schwingungsenergie entzogen und in das Fluid dissipiert wird. Daraus resultierend erfolgt eine Bedämpfung der Torsionsschwingungen des Meßrohr zu deren Aufrechterhaltung demzufolge dem Meßrohr zusätzliche Erregerenergie zugeführt werden muß. Die zugeführte Erregerenergie kann in geeigneter Weise gemessen und daraus abgeleite die Viskosität des Fluids ermittelt werden.

Üblicherweise werden die Meßrohre derartiger, z.B. in In-Line-Viskositätsmessern eingesetzter, Meßwandler im Betrieb auf einer momentanen Resonanzfrequenz eines Torsionschwingungs-Grundmodes, insb. bei konstantgeregelter Schwingungsamplitude, angeregt. Ferner ist es üblich, die Meßrohre für die Viskositätsmessung simultan oder alternierend zum Torsionsmode in Biegeschwingungen lateral zur Schwingungsachse anzuregen, und zwar vorzugsweise auf einer Resonanzfrequenz eines Biegeschwingungs-Grundmodes, vgl. hierzu auch die eingangs referierte US-A 45 24 610. Da diese Biege-Resonanzfrequenz insb. auch von der momentanen Dichte des Fluids abhängig ist, kann mittels solcher Meßgeräte neben der Viskosität auch die Dichte von in Rohrleitungen strömenden Fluiden gemessen werden.

Die Verwendung gerader, in der oben beschriebenen Weise vibrierender Meßrohre für die Viskositätsmessung hat im Vergleich zu einer Viskositätsmessung mit gebogenen Meßrohren bekanntermaßen den Vorteil, daß praktisch über die gesamte Meßrohrlänge Scherkräfte im Fluid, insb. auch mit einer hohen Eindringtiefe in radialer Richtung, erzeugt werden und somit eine sehr hohe Empfindlichkeit des Meßaufnehmers auf die zu messende Viskosität erreicht werden kann. Ferner besteht ein Vorteil z.B. auch darin, daß sie praktisch in jeder beliebigen Einbaulage, insb. auch nach einer In-line durchgeführten Reinigung, mit hoher Sicherheit rückstandslos entleert werden können. Darüber hinaus sind solche Meßrohre im Vergleich z.B. zu einem omegaförmig oder helixförmig gebogenem Meßrohr wesentlich einfacher und dementsprechend kostengünstiger herzustellen.

Demgegenüber besteht ein wesentlicher Nachteil vorbeschriebener Meßwandler darin, daß im Meßbetrieb via Meßrohr und ein ggf. vorhandenes Wandlergehäuse Torsionsschwingungen vom Meßwandler auf die angeschlossene Rohrleitung übertragen werden können, was wiederum zu einer Veränderrung des kalibrierten Nullpunkts und somit zu Ungenauigkeiten im Meßergebnis führen kann. Desweiteren kann das Auskoppeln von Schwingungsenergie in die Umgebung des Meßwandlers zu einer erheblichen Verschlechterung des Wirkungsgrades und ggf. auch zur Verschlechterung des Signal-zu Rausch-Verhältnisses im Meßsignal führen.

Ein Aufgabe der Erfindung besteht daher darin, einen, insb. für einen Viskositätsmesser geeigneten, Meßwandler vom Vibrationstyp anzugeben, der, auch bei einer Verwendung nur eines einzigen, insb. geraden, Meßrohrs, im Betrieb über einen weiten Fluiddichtebereich dynamisch gut ausbalanciert ist und der trotzdem von vergleichsweise geringer Masse ist.

Zur Lösung der gabe besteht die Erfindung in einem Meßwandler vom Vibrationstyp mit den in Anspruch 1 angegebenen Merkmalen.

Nach einer bevorzugten ersten Ausgestaltung der Erfindung ist der vibrierende Torsionschwingungs-Tilger lediglich vom vibrierenden Meßrohr angetrieben.

Nach einer bevorzugten zweiten Ausgestaltung der Erfindung ist der Torsionsschwingungs-Tilger einlaßseitig und auslaßseitig am Meßrohr fixiert.

Nach einer bevorzugten dritten Ausgestaltung der Erfindung weist der Torsionsschwingungs-Tilger eine Torsionseigenfrequenz auf, die größer als das 0,8-fache der Meßrohrschwingfrequenz ist.

Nach einer bevorzugten vierten Ausgestaltung der Erfindung weist der Torsionsschwingungs-Tilger eine Torsionseigenfrequenz auf, die kleiner als das 1,2-fache der Meßrohrschwingfrequenz ist.

Nach einer bevorzugten fünften Ausgestaltung der Erfindung ist der Torsionsschwingungs-Tilger mittels eines einlaßseitigen Teil-Tilgers und mittels eines auslaßseitigen Teil-Tilgers gebildet.

Nach einer bevorzugten sechsten Ausgestaltung der Erfindung umfaßt der Meßwandler ein einlaßseitig und auslaßseitig mit dem Meßrohr gekoppeltes Wandlergehäuse.

Nach einer bevorzugten siebenten Ausgestaltung der Erfindung umfaßt der Torsionsschwingungs-Tilger ein einlaßseitig und auslaßseitig am Meßrohr fixierten, insb. mit Meßrohr fluchtenden, Gegenschwinger.

Nach einer bevorzugten achten Ausgestaltung der Erfindung sind am Meßrohr Zusatzmassen vorgesehen.

Ein Grundgedanke der Erfindung besteht darin, seitens des torsionsschwingenden Meßrohrs erzeugte Torsionsmomente dadurch dynamisch zu kompensieren, daß seitens des, insb. lediglich vom Meßrohr angetriebenen, tordierenden Torsionsschwingungs-Tiler möglichst gleich große Gegen-Torsionsmomente erzeugt wird.

Ein Vorteil der Erfindung besteht darin, daß der Meßwandler trotz allfälliger, betriebsbedingter Schwankungen der Dichte und/oder der Viskosität im Fluid, auf einfache und robuste Weise so ausbalanciert ist, daß innere Torsionsmomente von der angeschlossenen Rohrleitung weitgehend fern gehalten werden können. Der erfindungsgemäße Meßwandler zeichnet sich des weiteren dadurch aus, daß er aufgrund dieser konstruktiv sehr einfachen Schwingungsentkopplung zum einen sehr kompakt und zum anderen sehr leicht ausgeführt werden kann.

Nachfolgend werden die Erfindung und weitere Vorteile anhand eines Ausführungsbeispiels erläutert, das in den Figuren der Zeichnung dargestellt ist. Gleiche Teile sind in den Figuren mit gleichen Bezugszeichen versehen. Falls es der Übersichtlichkeit dienlich ist, wird auf bereits erwähnte Bezugszeichen in nachfolgenden Figuren verzichtet.
- Fig. 1: zeigt ein in eine Rohrleitung einfügbares Meßgerät zum Messen einer Viskosität eines in der Rohrleitung geführten Fluids,
- Fig. 2: zeigt ein Ausführungsbeispiel für einen für das Meßgerät von Fig. 1 geeigneten Meßwandler vom Vibrations-Typ in einer perspektivischen Seitenansicht,
- Fig. 3: zeigt den Meßwandler von Fig. 2 geschnitten in einer Seitenansicht,
- Fig. 4: zeigt den Meßwandler von Fig. 2 in einem ersten Querschnitt,
- Fig. 5: zeigt den Meßwandler von Fig. 2 in einem zweiten Querschnitt,
- Fig. 6: zeigt ein weiteres Ausführungsbeispiele für einen für das Meßgerät von Fig. 1 geeigneten Meßwandler vom Vibrations-Typ geschnitten in einer Seitenansicht und
- Fign. 7 a und b: zeigen schematisch Biegelinien des Meßrohrs und eines Gegenschwingers in einem lateralen Biegeschwingungsmode oszillierend.

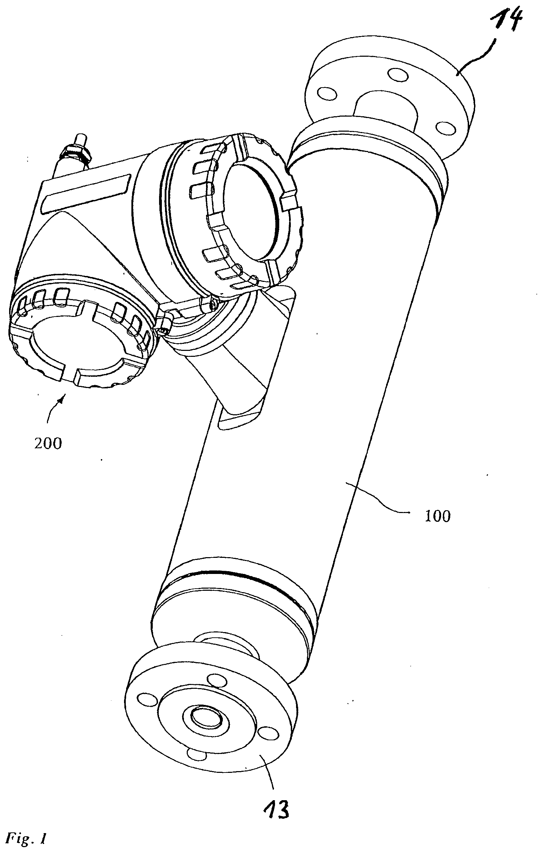

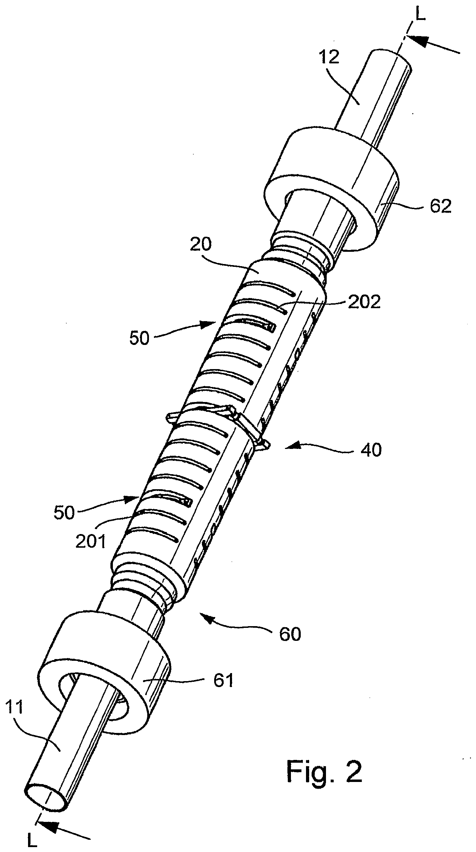

In der Fig. 1 ist ein in eine - hier nicht gezeigte - Rohrleitung einfügbares Meßgerät zum Messen einer Viskosität eines in der Rohrleitung geführten Fluids dargestellt. Darüber hinaus ist das Meßgerät bevorzugt auch zur Messung eines Massendurchflusses und/oder einer Dichte des Fluids vorgesehen. Das Meßgerät umfaßt einen Meßwandler vom Vibrationstyp der im Betrieb vom zu messenden Fluid durchströmt ist. In den Fig. 2 bis 6 sind entsprechende Ausführungsbeispiele und Ausgestaltungen für solche Meßwandler vom Vibrationstyp schematisch dargestellt.

Zum Führen des Fluids umfaßt der Meßwandler ein, insb. einziges, im wesentlichen gerades Meßrohr 10, das im Betrieb, zumindest zeitweise um ein Meßrohrlängsachse Torsionsschwingungen ausführend, wiederholt elastisch verformt wird.

Zum Hindurchströmenlassen des Fluids ist das Meßrohr 10 über ein einlaßseitig einmündendes Einlaßrohrstück 11 und über ein auslaßseitig einmündendes Auslaßrohrstück 12 an eine das Fluid zu- bzw. abführende, hier nicht dargestellte, Rohrleitung angeschlossen. Meßrohr 10, Einlaß- und Auslaßrohrstück 11, 12 sind, zueinander und zu einer imaginären Längsachse L fluchtend ausgerichtet und in vorteilhafter Weise einstückig ausgeführt, so daß zu deren Herstellung z.B. ein einziges rohrförmiges Halbzeug dienen kann; falls erforderlich können Meßrohr 10 und Rohrstücke 11, 12 aber auch mittels einzelner, nachträglich zusammengefügter, z.B. zusammengeschweißter, Halbzeuge hergestellt werden. Zur Herstellung des Meßrohrs 10 kann hierbei praktisch jedes der für solche Meßwandler üblichen Materialien, wie z.B. Stahl, Titan, Zirkonium etc., verwendet werden.

Für den Fall, daß der Meßwandler lösbaren mit der Rohrleitung zu montieren ist, ist dem Einlaßrohrstück 11 und dem Auslaßrohrstück 12 bevorzugt jeweils ein erster bzw. zweiter Flansch 13, 14 angeformt; falls erforderlich können Ein- und Auslaßrohrstück 11, 12 aber auch direkt mit der Rohrleitung, z.B. mittels Schweißen oder Hartlötung, verbunden werden.

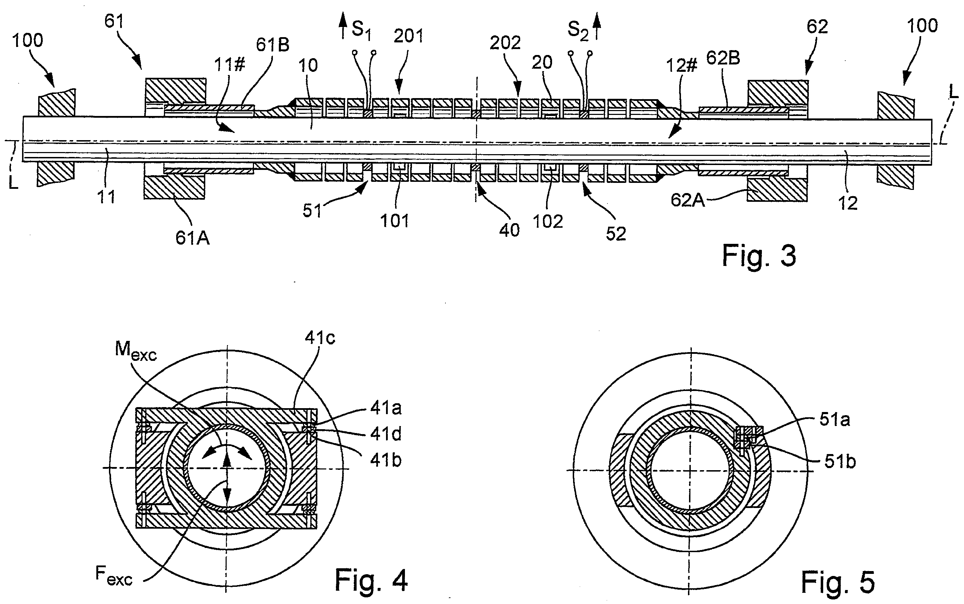

Ferner ist, wie in den Fig. 1 schematisch dargestellt, am Ein- und am Auslaßrohrstück 11, 12 ein äußere Tragsystem 100 fixiert, das, bevorzugt auch als ein das Meßrohr 10 aufnehmendes oder umhüllendes Wandlergehäuse ausgestaltet sein kann, vgl. Fig. 1 und 3.

Zum Erzeugen von mit der Viskosität korrespondierenden Reibungskräften im Fluid wird das Meßrohr 10 im Betrieb zumindest zeitweise so zu Torsionsschwingungen, insb. im Bereich einer natürlichen Torsions-Resonanzfrequenz, angeregt, daß es im wesentlichen gemäß einer natürlichen Torsionsschwingungsform um seine Längsachse L verdrillt wird, vgl. hierzu z.B. auch die US-A 45 24 610, die US-A 52 53 533, die US-A 60 06 609 oder die EP-A 1 158 289.

Bevorzugt wird das Meßrohr 10 dabei im Betrieb mit einer Torsionsschwingungs-Frequenz f_{excT} angeregt, die möglichst genau einer natürlichen Resonanzfrequenz jenes Grund-Torsionseigenmodes entspricht, bei dem das tordierende Meßrohr 10 über seine gesamte Länge im wesentlichen gleichgerichtet verdreht wird. Eine natürliche Resonanzfrequenz dieses Grund-Torsionseigenmodes kann bei einem als Meßrohr 10 dienenden Edelstahlrohr mit einer Nennweite von 20 mm, einer Wandstärke von etwa 1,2 mm und einer Länge von etwa 350 mm sowie allfälligen Anbauten (s. u.), beispielsweise bei etwa 1500 Hz bis 2000 Hz liegen.

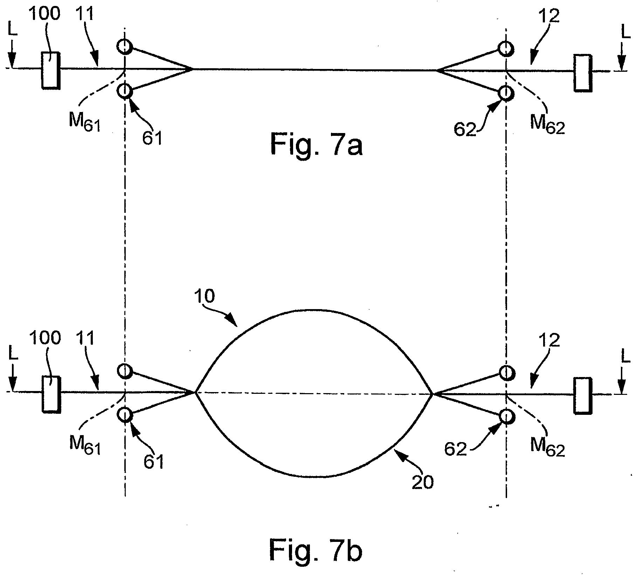

Nach einer bevorzugten Weiterbildung der Erfindung wird das Meßrohr 10 im Betrieb des Meßwandlers zusätzlich zu den Torsionsschwingungen, insb. simultan zu diesen, zu Biegeschwingungen so angeregt, daß es sich im wesentlichen gemäß einer natürlichen ersten Biegeschwingungsform ausbiegt. Bevorzugt wird das Meßrohr 10 dazu mit einer Biegeschwingungs-Frequenz f_{excB} angeregt, die möglichst genau einer niedrigsten natürlichen Biege-Resonanzfrequenz des Meßrohrs 10 entspricht, so daß also das vibrierende, jedoch nicht vom Fluid durchströmte Meßrohr 10, wie in Fig. 7a, 7b schematisch dargestellt, bezüglich einer zur Längsachse senkrechten Mittelachse im wesentlichen symmetrisch ausgebogen wird und dabei einen einzigen Schwingungsbauch aufweist. Diese niedrigste Biege-Resonanzfrequenz kann beispielsweise bei einem als Meßrohr 10 dienenden Edelstahlrohr mit einer Nennweite von 20 mm, einer Wandstärke von etwa 1,2 mm und einer Länge von etwa 350 mm sowie den üblichen Anbauten bei etwa 850 Hz bis 900 Hz liegen.

Für den Fall, daß das Fluid in der Rohrleitung strömt und somit ein Massendurchfluß m von Null verschieden ist, werden so mittels biegeschwingenden Meßrohrs 10 im hindurchströmenden Fluid Corioliskräfte induziert. Diese wiederum wirken auf das Meßrohr 10 zurück und bewirken so eine zusätzliche, sensorisch erfaßbare, hier jedoch nicht dargestellte, Verformung des Meßrohrs 10 gemäß einer natürlichen zweiten Biegeschwingungsform, die der ersten Biegeschwingungsform koplanar überlagert ist. Die momentane Ausprägung der Verformung des Meßrohrs 10 ist dabei, insb. hinsichtlich ihrer Amplituden, auch vom momentanen Massendurchfluß *m* abhängig. Als zweite Biegeschwingungsform, dem sogenannten Coriolismode, können z.B., wie bei derartigen Meßwandlern üblich, anti-symmetrische Biegeschwingungsformen mit zwei Schwingungsbäuchen oder mit vier Schwingungsbäuchen dienen.

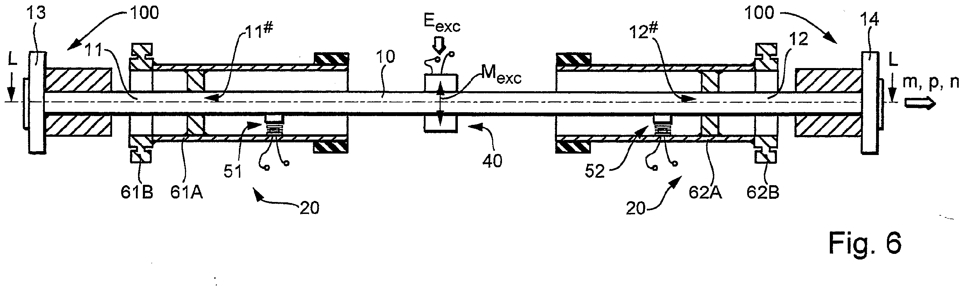

Zum Erzeugen mechanischer Schwingungen des Meßrohrs 10 umfaßt der Meßwandler ferner eine, insb. elektrodynamische, Erregeranordnung 40. Diese dient dazu, eine von einer, hier nicht dargestellten, Steuer-Elektronik eingespeiste, elektrische Erregerenergie *E_{exc}*, z.B. mit einem geregelten Strom und/oder einer geregelten Spannung, in ein auf das Meßrohr 10, z.B. pulsförmig oder harmonisch, einwirkendes und dieses in der vorbeschriebenen Weise elastisch verformendes Erregermoment M*_{exc}* und ggf. eine lateral wirkende Erregerkraft F_{exc} umzuwandeln. Das Erregermoment M*_{exc}* kann hierbei, wie in Fig. 4 oder 6 schematisch dargestellt, bidirektional oder aber auch unidirektional ausgebildet sein und in der dem Fachmann bekannten Weise z.B. mittels einer Strom-und/oder Spannungs-Regelschaltung, hinsichtlich ihrer Amplitude und, z.B. mittels einer Phasen-Regelschleife, hinsichtlich ihrer Frequenz eingestellt werden. Abgeleitet von der zum Aufrechterhalten der Torsionsschwingungen und ggf. auch der Biegeschwingungen des Meßrohrs 10 erforderlichen elektrischen Erregerenergie *E_{exc},* kann in der dem Fachmann bekannten Weise die Viskosität des Fluids ermittelt werden, vgl. hierzu im besonderen die US-A 45 24 610, die US-A 52 53 533, die US-A 60 06 609 oder die EP-A 1 158 289.

Als Erregeranordnung 40 kann z.B. eine einfache Tauchspulenanordnung mit einer am Wandlergehäuse 100 befestigten zylindrischen Erregerspule, die im Betrieb von einem entsprechenden Erregerstrom durchflossen ist, und mit einem in die Erregerspule zumindest teilweise eintauchenden dauermagnetischen Anker, der von außen exzentrisch, insb. mittig, am Meßrohr 10 fixiert ist, dienen. Ferner kann die Erregeranordnung 40 auch, wie z.B. in der US-A 45 24 610 gezeigt, mittels eines oder meherer Elektromagnete realisiert sein.

Zum Detektieren von Schwingungen des Meßrohr 10 kann z.B. eine für derartige Meßwandler übliche Sensoranordnung verwendet werden, bei der in der dem Fachmann bekannten Weise mittels wenigstens eines ersten Sensors 51, vorzugsweise aber auch mittels eines zweiten Sensors 52 die Bewegungen des Meßrohrs 10, insb. einlaßseitig und auslaßseitig, erfaßt und in entsprechende Sensorsignale S₁, S₂ umgewandelt werden. Als Sensoren 51, 52 können z.B., wie in Fig. 2, 3 oder 5 schematisch dargestellt, die Schwingungen relativ messende, elektrodynamische Geschwindigkeitssensoren oder aber elektrodynamische Wegsensoren oder Beschleunigungssensoren verwendet werden. Anstelle elektrodynamischer Sensoranordnungen können ferner auch mittels resistiver oder piezoelektrischer Dehnungsmeßstreifen messende oder opto-elektronische Sensoranordnungen zum Detektieren der Schwingungen des Meßrohrs 10 dienen.

Wie bereits erwähnt, werden die Torsionsschwingungen einerseits durch eine erwünschte und, insb. zum Zwecke der Viskositätsmessung, sensorisch erfaßte Energieabgabe an das Fluid bedämpft. Andererseits aber kann dem vibrierenden Meßrohr 10 auch dadurch Schwingungsenergie entzogen werden, daß mit diesem mechanisch gekoppelte Bauteile, wie z.B. das Wandlergehäuse 100 oder die angeschlossene Rohrleitung, ebenfalls zu Schwingungen angeregt werden. Während die, wenn auch unerwünschte, Energieabgabge an das Gehäuse 100 noch kalibrierbar wäre, so erfolgt jedoch zumindest die Energieabgabe an die Umgebung des Meßwandlers, insb. die Rohrleitung, in einer praktisch nicht mehr reproduzier- oder sogar nicht vorherbestimmbaren Weise.

Zum Zwecke der Unterdrückung einer solchen Abgabe von Torsions-Schwingungsenergie an die Umgebung umfaßt der Meßwandler ferner einen einlaßseitig und auslaßseitig am Meßrohr 10 fixierten Torsionsschwingungs-Tilger 60. Der Torsionsschwingungs-Tilger 60 dient erfindungsgemäß dazu, vom um seine Längsachse L tordierenden einzigen Meßrohr 10 abgegebene Torsionsschwingungs-Energie zumindest anteilig aufzunehmen und so von der Umgebung des Meßwandlers, insb. aber von der angeschlossenen Rohrleitung, fern zu halten. Dazu ist der Torsionsschwingungs-Tilger mit wenigstens einer seiner Torsions-Resonanzfrequenzen, beispielsweise einer niedrigsten, möglichst genau auf die Torsionsschwingungs-Frequenz f_{excT} abgestimmt, mit der das Meßrohrs 10 im Betrieb überwiegend schwingen gelassen wird. Somit kann erreicht werden, daß der Torsionsschwingungs-Tilger 60 zumindest anteilig Torsionsschwingungen ausführt, die außerphasig, insb. gegenphasig, zu Torsionsschwingungen des Meßrohrs 10 liegen.

Überdies kann der Torsionsschwingungs-Tilger so auf das Meßrohr 10 abgestimmt und so daran fixiert sein, daß das Einlaßrohrstück 11 und das Auslaßrohrstück 12 auch bei torsionsschwingendem Torsionsschwingungs-Tilger 60 von Torsionsspannungen weitgehend frei gehalten sind.

Die Verwendung eines solchen Torsionsschwingung-Tilgers beruht insb. auf der Erkenntnis, daß das in der oben beschriebenen Weise schwingen gelassene Meßrohr 10 wenigstens eine Torsions-Resonanzfrequenz aufweist, die - im Gegensatz z.B. zu dessen Biege-Resonanzfrequenzen - in einem nur sehr geringen Maße mit der Dichte oder der Viskosität des Fluids korreliert ist, und die somit ohne weiteres im Betrieb weitestgehend konstant gehalten werden kann. Dementsprechend kann ein derartiger Torsionsschwingung-Tilger bereits vorab mit wenigstens einer seiner Torsions-Resonanzfrequenzen vergleichsweise genau auf die im Betrieb zu erwartende Torsions-Resonanzfrequenz des Meßrohrs abgestimmt werden. Zumindest für den oben beschriebene Fall, daß die Erregeranordnung 40 mit dem Meßrohr 10 und dem Wandlergehäuse 100 verbunden ist, wird der schwingende Torsionschwingungs-Tilger indirekt, und zwar praktisch ausschließlich vom vibrierenden Meßrohr 10, angetrieben.

Wie in der Fig. 6 gezeigt, umfaßt der Torsionsschwingungs-Tilger 60 nach einer bevorzugten Ausgestaltung der Erfindung einen ersten Drehmassenkörper 61A von vorgebbarem Trägheitsmoment, der über einen ersten Drehfederkörper 61B von vorgebbarer Drehsteifigkeit mit dem Meßrohr 10 gekoppelt ist sowie einen zweiten Drehmassenkörper 62A von vorgebbarem Trägheitsmoment, der über einen zweite Drehfederkörper 62B von vorgebbarer Drehsteifigkeit mit dem Meßrohr 10 gekoppelt ist. Die Drehfederkörper 61A, 61B können z.B. aus dickwandigen, kurzen Metall-Ringen von entsprechender Masse gefertigt werden, während als Drehfederkörper 61B, 62B beispielsweise kurze, vergleichsweise dünnwandigen Metall-Rohrstücke dienen können, deren Länge, Wandstärke und Querschnitt so gewählt ist, daß die erforderliche Drehsteifigkeit erreicht wird.

Für den hier gezeigten Fall, daß die beiden, insb. symmetrisch zur Mitte des Meßrohrs 10 angeordneten, Drehkörper 61A, 62A nicht starr miteinander verbunden, insb. von einander getrennt, sind, wird der Torsionsschwingungs-Tilger 60 praktisch mittels eines einlaßseitigen ersten und eines auslaßseitigen zweiten Teil-Tilgers 61, 62 gebildet. Falls erforderlich, können die beiden Drehkörper 61A, 62A noch zusätzlich direkt miteinander, starr oder elastisch, gekoppelt sein. Dementsprechend kann z.B. auch ein einziges, das Meßrohr 10 umhüllendes und mittels der beiden Drehfedern 61B, 62B in der oben beschriebenen Weise am Meßrohr fixiertes Rohr als Drehkörper 61A, 62A dienen. Für die Herstellung der beiden Teil-Tilger 61, 62 können dabei praktisch dieselben Materialien verwendet werden, wie sie auch für das Meßrohr 10 in Frage kommen, beispielsweise also Edelstahl etc.

Die beiden Teil-Tilger 61, 62 sind nach einer bevorzugten Ausgestaltung der Erfindung, wie in den Fig. 7a und 7b schematisch dargestellt, auslegerartig geformt und so im Meßwandler angeordnet, daß ein Masseschwerpunkt M₆₁ des einlaßseitigen Teil-Tilgers bzw. ein Masseschwerpunkt M₆₂ des auslaßseitigen Teil-Tilgers vom Meßrohr 10, insb. in dessen Flucht liegend, beabstandet ist. Auf diese Weise können mittels der beiden Teil-Tilger 61, 62 exzentrisch, also nicht im zugehörigen Massenschwerpunkt M₆₁ bzw. M₆₂, an der jeweiligen Fixierstelle, nämlich einem Einlaßende 11^{#} des Meßrohrs 10 bzw. einem Auslaßende 12^{#} des Meßrohrs 10, angreifende Massenträgheitsmomente geschaffen werden. Dies hat insb. den Vorteil, daß für den Fall, daß das Meßrohr 10, wie oben erwähnt, biegeschwingen gelassen wird, lateral wirkende Trägheitskräfte zumindest teilweise kompensiert werden können, vgl. hierzu insb. die eigene, nicht vorveröffentliche internationale Patentanmeldung PCT/EP02/02157.

Nach einer bevorzugten Weiterbildung der Erfindung umfaßt der Torsionsschwingungs-Tilger 60 zur weiteren Minimierung von auf das Meßrohr 10 wirkenden Störeinflüssen einen im wesentlichen parallel zum Meßrohr 10 verlaufenden Gegenschwinger 20. Umgekehrt wird mittels des Gegenschwingers 20 auch die Abgabe von Torsionsschwingungs-Energie an die angeschlossenen Rohrleitung weiter reduziert.

Der Gegenschwinger 20 kann, wie in den Fig. 2 und 3 schematisch dargestellt, rohrförmig ausgeführt und beipielsweise so am Einlaßende 11# und am Auslaßende 12# mit dem Meßrohr 10 verbunden sein, daß er, wie in Fig. 3 gezeigt, im wesentlichen koaxial zum Meßrohr 10 ausgerichtet ist. Als Material für den Gegenschwinger 20 kommen praktisch dieselben Materialien in Frage, wie sie auch für das Meßrohr 10 verwendbar sind, also Edelstahl, Titan etc.

Bei dieser Weiterbildung der Erfindung ist die Erregeranordnung 40, wie auch in Fig. 2 gezeigt, in vorteilhafter Weise so ausgebildet und so im Meßwandler angeordnet, daß sie im Betrieb gleichzeitig, insb. differentiell, auf Meßrohr 10 und Gegenschwinger 20 wirkt. Im in der Fig. 4 gezeigten Ausführungsbeispiel weist die Erregeranordnung 40 dazu wenigstens eine im Betrieb zumindest zeitweise vom Erregerstrom oder einem Erregerteilstrom durchflossene erste Erregerspule 41a auf, die an einem mit dem Meßrohr 10 verbundenen Hebel 41c fixiert ist und über diesen und einen von außen am Gegenschwinger 20 fixierten Anker 41b differentiell auf das Meßrohr 10 und den Gegenschwinger 20 einwirkt. Diese Anordnung hat u.a. auch den Vorteil, daß einerseits der Gegenschwinger 20 und somit auch das Wandlergehäuse 100 im Querschnitt klein gehalten und trotzdem die Erregerspule 41a, insb. auch bei der Montage, leicht zugänglich ist. Darüber hinaus besteht eine weiterer Vorteil dieser Ausgestaltung der Erregeranordnung 40 auch darin, daß allfällig verwendete, insb. bei Nennweiten von über 80 mm nicht mehr vernachlässigbar schwere, Spulenbecher 41d ebenfalls am Gegenschwinger 20 fixierbar sind und somit praktisch keinen Einfluß auf die Resonanzfrequenzen des Meßrohrs 10 haben. Es sei jedoch an dieser Stelle darauf hingewiesen, daß falls erforderlich, die Erregerspule 41a auch vom Gegenschwinger 20 und dementsprechend der Anker 41b vom Meßrohr 10 gehaltert werden können.

In entsprechender Weise kann auch die Sensoranordnung 50 so ausgelegt und im Meßwandler angeordnet sein, daß durch sie die Vibrationen von Meßrohr 10 und Gegenschwinger 20 differentiell erfaßt werden. Im in der Fig. 5 gezeigten Ausführungsbeispiel umfaßt die Sensoranordnung 50 eine am Meßrohr 10 fixierte, hier außerhalb sämtlicher Trägheitshauptachsen der Sensoranordnung 50 angeordnete, Sensorspule 51a. Die Sensorspule 51a ist möglichst nah zu einem am Gegenschwinger 20 fixierten Anker 51b angeordnet und mit diesem magnetisch so gekoppelt, daß in der Sensorspule eine durch rotatorische und/oder laterale, ihre relative Lage und/oder ihren relativen Abstand verändernde Relativbewegungen zwischen Meßrohr 10 und Gegenschwinger 20 beinflußte, veränderliche Meßspannung induziert wird. Aufgrund einer solchen Anordnung der Sensorspule 51a können in vorteilhafter Weise gleichzeitig sowohl die oben genannten Torsionsschwingungen als auch die ggf. angeregten Biegeschwingungen erfaßt werden. Falls erforderlich können die Sensorspule 51a dazu aber auch am Gegenschwinger 20 und in entsprechender Weise der mit dieser gekoppelte Anker 51b am Meßrohr 10 fixiert sein.

Für den oben beschriebenen Fall, daß das Meßrohr 10 im Betrieb zusätzlich zu Biegeschwingungen angeregt wird, kann der Gegenschwinger 20 weiters dazu dienen, den Meßwandler für genau einen vorherbestimmten, z.B. einen im Betrieb des Meßwandlers am häufigsten zu erwartenden oder auch kritischen Fluiddichtewert soweit dynamisch auszubalancieren, daß im vibrierenden Meßrohr 10 allfällig erzeugte Querkräfte zumindest zeitweise vollständig kompensiert werden und letzteres dann seine statische Ruhelage praktisch nicht verläßt, vgl. Fig. 7a, 7b. Dementsprechend wird der Gegenschwinger 20, wie in Fig. 7b schematisch dargestellt, im Betrieb des Meßwandlers ebenfalls zu Biegeschwingungen angeregt, die im wesentlichen koplanar zu den Biegeschwingungen des Meßrohrs 10 ausgebildet sind.

Nach einer bevorzugten Ausgestaltung der Erfindung eine niedrigste Torsions-Resonanzfrequenz des Torsionsschwingungs-Tilger 60 nicht größer als ein 1,2-faches der Torsions-Resonanzfrequenz des Meßrohrs 10. Nach einer weiteren bevorzugten Ausgestaltung der Erfindung eine niedrigste Torsions-Resonanzfrequenz des Torsionsschwingungs-Tilger nicht kleiner als ein 0,8-faches der Torsions-Resonanzfrequenz des Meßrohrs 10.

Nach einer weiteren bevorzugten Ausgestaltung der Erfindung weist der Gegenschwinger 20 eine niedrigste Torsions-Resonanzfrequenz f₂₀ auf die von einer jeweiligen Torsions-Resonanzfrequenz f₆₁, f₆₂ des Teil-Tilgers 61 bzw. 62 jeweils verschieden ist. Vorzugsweise ist die Torsions-Resonanzfrequenz f₂₀ des Gegenschwingers 20 dabei so eingestellt, daß sie im wesentlichen gleich der Torsionsschwingungs-Frequenz f_{excT} ist, auf der das Meßrohr 10 im Betrieb angeregt wird. Dies führt dazu, daß das Meßrohr 10 und der Gegenschwinger 20 zueinander außerphasig torsionsschwingen, und zwar im wesentlichen gegenphasig. In vorteilhafter Weise weist der Gegenschwinger 20 zumindest für diesen Fall eine dem Meßrohr 10 ähnliche oder gleiche Torssionssteifigkeit oder auch Torsionselastizität auf. Es hat sich jedoch auch als vorteilhaft erwiesen, die Torsions-Resonanzfrequenzen f₆₁, f₆₂ der beiden Teil-Tilger 61 bzw. 62 so einzustellen, daß sie im wesentlichen gleich der Torsionsschwingungs-Frequenz f_{excT} sind. Für diesen Fall ist die Torsions-Resonanzfrequenz f₂₀ des Gegenschwingers 20 vorzugsweise so gewählt, daß sie unterhalb oder oberhalb der zu erwartenden Torsionsschwingungs-Frequenz f_{excT} liegt.

Falls erforderlich, kann der Gegenschwinger 20 auch, wie z.B. auch in der US-A 59 69 265, der EP-A 317 340 oder der WO-A 00 14 485 gezeigt, mehrteilig zusammengesetzt oder mittels zweier separater, einlaß- bzw. auslaßseitig am Meßrohr 10 fixierter Teil-Gegenschwinger realisiert sein, vgl. Fig. 6. Insbesondere für diesen Fall, bei dem der praktisch als ein inneres Tragsystem dienende Gegenschwinger 20 mittels eines einlaßseitigen und eines auslaßseitigen Teil-Gegenschwingers gebildet ist, kann dementsprechend das äußere Tragsystem 100 ebenfalls mehrteilig mit einem einlaßseitigen und einem auslaßseitigen Teilsystem ausgeführt sein, vgl. Fig. 6.

Nach einer weiteren bevorzugten Weiterbildung der Erfindung sind ferner, wie in Fig. 3 schematisch dargestellt, Massenausgleichskörper 101, 102 vorgesehen, die am Meßrohr 10 fixiert ein genaues Einstellen von dessen Torsions-Resonanzfrequenzen und somit z.B. auch eine verbesserte Angleichung an die Signalauswertung ermöglichen. Als Massenausgleichskörper 101, 102 können z.B. auf das Meßrohr 10 aufgeschobene Metallringe oder an diesem fixierte Metallplättchen dienen.

Nach einer anderen bevorzugten Weiterbildung der Erfindung sind ferner, wie in Fig. 3 schematisch dargestellt, im Gegenschwinger 20 eingearbeitete Nuten 201, 202 vorgesehen, die eine genaues Einstellen von dessen Torsions-Resonanzfrequenzen, insb. ein Absenken der Torsions-Resonanzfrequenzen durch Absenken einer Torsions-Steifigkeit des Gegenschwingers 20, auf einfache Weise ermöglichen. Obwohl die Nuten 201, 202 in der Fig. 2 oder 3 in Richtung der Längsachse L im wesentlichen gleichverteilt gezeigt sind, können sie, falls erforderlich, ohne weiteres auch in Richtung der Längsachse L ungleich verteilt angeordnet sein.

Wie sich aus den vorangegangenen Erläuterungen unschwer erkennen läßt, zeichnet sich der erfindungsgemäße Meßwandler durch eine Vielzahl von Einstellmöglichkeiten aus, die es dem Fachmann, insb. auch noch nach einer Spezifikation von äußeren oder inneren Einbaumaßen, ermöglichen, eine Kompensation von im Meßrohr 10 und ggf. im Gegenschwinger 20 betriebsbedingt erzeugten Torsionskräften mit einer hohen Güte zu erzielen und somit die Abgabe von Torsionsschwingungs-Energie an die Umgebung des Meßwandlers zu minimisieren.

## Patentansprüche

1. Meßwandler vom Vibrationstyp für ein in einer Rohrleitung strömendes Fluid, welcher Meßwandler umfaßt:
- ein, insb. einziges, im wesentlichen gerades, im Betrieb mit einer vorgebbaren Meßrohrschwingfrequenz vibrierendes Meßrohr (10) zum Führen des Fluids,
--wobei das Meßrohr (10) über ein in ein Einlaßende (11#) des Meßrohrs (10) mündendes Einlaßrohrstück (11) und über ein in ein Auslaßende (12#) des Meßrohrs (10) mündendes Auslaßrohrstück (12) mit der Rohrleitung kommuniziert
-- und wobei Meßrohr (10), Einlaß- und Auslaßrohrstück (11, 12) zueinander und zu einer imaginären Längsachse (L) fluchtend ausgerichtet sind,
- eine auf das Meßrohr (10) einwirkende Erregeranordnung (40) zum Vibrierenlassen des Meßrohrs (10), derart, das Meßrohr (10), insb. zum Erzeugen von Scherkräften im Fluid, zumindest zeitweise Torsionsschwingungen um eine gedachte Meßrohrlängsachse (L) mit einer momentanen Torsions-Schwingungsfrequenz, f_{excT}, ausführt,
- eine Sensoranordnung (50) zum Erfassen von Vibrationen des Meßrohrs (10) sowie
- einen am Meßrohr (10) fixierten Torsionsschwingungs-Tilger (60), der im Betrieb zumindest anteilig außerphasig zum torsions-schwingenden Meßrohr (10) schwingen gelassen wird,
- wobei der Torsionsschwingungs-Tilger (60) einen ersten Drehmassenkörper von vorgebbarem Trägheitsmoment, der über einen ersten Drehfederkörper von vorgebbarer Drehsteifigkeit mit dem Meßrohr (10) gekoppelt ist, sowie einen zweiten Drehmassenkörper von vorgebbarem Trägheitsmoment, der über einen zweite Drehfederkörper von vorgebbarer Drehsteifigkeit mit dem Meßrohr (10) gekoppelt ist, umfaßt.

2. Meßwandler nach Anspruch 1, bei dem der schwingende Torsionschwingungs-Tilger (60) lediglich vom vibrierenden, nämlich Torsionsschwingungen ausführenden Meßrohr (10) angetrieben ist.

3. Meßwandler nach Anspruch 1 oder 2, bei dem der Torsionsschwingungs-Tilger (60) einlaßseitig und auslaßseitig am Meßrohr (10) fixiert ist.

4. Meßwandler nach einem der vorherigen Ansprüche, bei dem der Torsionsschwingungs-Tilger (60) eine Torsionseigenfrequenz aufweist, die größer als das 0,8-fache der Meßrohrschwingfrequenz ist.

5. Meßwandler nach einem der vorherigen Ansprüche, bei dem der Torsionsschwingungs-Tilger (60) eine Torsionseigenfrequenz aufweist, die kleiner als das 1,2-fache der Meßrohrschwingfrequenz ist.

6. Meßwandler nach einem der vorherigen Ansprüche, bei dem der Torsionsschwinger (60) mittels eines einlaßseitigen Teil-Tilgers (61A, 61B) und mittels eines auslaßseitigen Teil-Tilgers (62A, 62B) gebildet ist.

7. Meßwandler nach dem vorherigen Anspruch,
- wobei eine Torsions-Resonanzfrequenz, f₆₁, f₆₂, der Teil-Tilger (61, 62) so eingestellt ist, daß sie im wesentlichen gleich der Torsionsschwingungs-Frequenz ist, auf der das Meßrohr (10) im Betrieb angeregt wird; und/oder
- wobei die beiden Teil-Tilger (61, 62) auslegerartig geformt und so im Meßwandler angeordnet sind, daß ein Masseschwerpunkt, M₆₁, des einlaßseitigen Teil-Tilgers bzw. ein Masseschwerpunkt, M₆₂, des auslaßseitigen Teil-Tilgers vom Meßrohr (10), insb. in dessen Flucht liegend, beabstandet ist.

8. Meßwandler nach einem der vorherigen Ansprüche, bei dem der Meßwandler ein am Ein- und am Auslaßrohrstück (11, 12) fixiertes Wandlergehäuse (100) umfaßt.

9. Meßwandler nach einem der vorherigen Ansprüche, bei dem am Meßrohr (10) fixierte Zusatzmassen (101, 102) vorgesehen sind.

10. Meßwandler nach einem der vorherigen Ansprüche, bei dem der Meßwandler ein einlaßseitig und auslaßseitig am am Meßrohr (10) fixierten, insb. mit Meßrohr (10) fluchtenden, Gegenschwinger (20) umfaßt.

11. Meßwandler nach dem vorherigen Anspruch, bei dem in den Gegenschwinger (20) eingeformte Nuten (201, 202) vorgesehen sind.

12. Meßwandler nach Anspruch 10 oder 11, bei dem eine Torsions-Resonanzfrequenz des Gegenschwingers (20) so eingestellt ist, daß sie im wesentlichen gleich der Torsionsschwingungs-Frequenz ist, auf der das Meßrohr (10) im Betrieb angeregt wird.

13. Meßwandler nach einem der Ansprüche 1 bis 5 oder 8 bis12, wobei die beiden Drehkörper zusätzlich direkt miteinander, insb. starr oder elastisch, gekoppelt sind.

14. Meßwandler nach einem der vorherigen Ansprüche, wobei das Meßrohr (10) im Betrieb des Meßwandlers zusätzlich zu den Torsionsschwingungen, insb. simultan zu diesen, zu Biegeschwingungen, insb. mit einer einer niedrigsten natürlichen Biege-Resonanzfrequenz des Meßrohrs (10) entsprechenden Biegeschwingungs-Frequenz, f_{excB}, angeregt ist, derart daß es sich im wesentlichen gemäß einer natürlichen Biegeschwingungsform ausbiegt

15. Meßwandler nach einem der vorherigen Ansprüche, wobei das Meßrohr das einzige Meßrohr des Meßwandlers ist.

## Claims

1. Vibronic-type transducer for a fluid flowing through a pipe wherein said transducer comprises:
- a measuring tube (10), particularly a single measuring tube, which is essentially straight and vibrates during operation at a predefinable measuring tube vibration frequency, said tube being designed to conduct the fluid,
-- wherein said measuring tube (10) communicates with the pipe via an inlet tube section (11) which enters into an inlet end (11#) of the measuring tube (10) and via an outlet tube section (12) which enters into an outlet end (12#) of the measuring tube (10)
-- and wherein the measuring tube (10), the inlet tube section and the outlet tube section (11, 12) are aligned with one another and with an imaginary longitudinal axis (L),
- an exciter arrangement (40) that acts on the measuring tube (10) and causes the measuring tube (10) to vibrate in such a way that the measuring tube (10) at least intermittently produces torsional vibrations around an imaginary measuring tube longitudinal axis (L) with a current torsional vibration frequency, f_{excT'}, particularly for the purpose of generating shear forces in the fluid
- a sensor arrangement (50) designed to measure vibrations of the measuring tube (10), as well as
- a torsional vibration absorber (60) fixed on the measuring tube (10) which is allowed to vibrate, during operation, at least partially in a manner that is out of phase with the measuring tube (10) producing the torsional vibrations,
- wherein the torsional vibration absorber (60) comprises a first rotating mass body of a predefinable moment of inertia, which is coupled with the measuring tube (10) via a first torsional spring body of a predefinable torsional stiffness, as well as a second rotating mass body of a predefinable moment of inertia, which is coupled with the measuring tube (10) via a second torsional spring body of a predefinable torsional stiffness.

2. Transducer as claimed in Claim 1, wherein the oscillating torsional vibration absorber (60) is only driven by the vibrating measuring tube (10) performing said torsional vibrations.

3. Transducer as claimed in Claim 1 or 2, wherein the torsional vibration absorber (60) is fixed on the measuring tube (10) on the inlet side and on the outlet side.

4. Transducer as claimed in one of the previous claims, wherein the torsional vibration absorber (60) has a natural torsional frequency that is greater than 0.8 times the measuring tube vibration frequency.

5. Transducer as claimed in one of the previous claims, wherein the torsional vibration absorber (60) has a natural torsional frequency that is less than 1.2 times the measuring tube vibration frequency.

6. Transducer as claimed in one of the previous claims, wherein the torsional vibration absorber (60) is formed by a partial absorber on the inlet side (61A, 61B) and a partial absorber on the outlet side (62A, 62B).

7. Transducer as claimed in the previous claim,
- wherein a torsional resonance frequency, f₆₁, f₆₂, of the partial absorbers (61, 62) is set in such a way that it is essentially equal to the torsional vibration frequency at which the measuring tube (10) is excited during operation; and/or
- wherein the two partial absorbers (61, 62) are formed like a cantilever and are arranged in the transducer in such a way that a center of mass, M₆₁, of the partial absorber on the inlet side or a center of mass, M₆₂, of the partial absorber on the outlet side is at a distance from the measuring tube (10), particularly aligned with said tube.

8. Transducer as claimed in one of the previous claims, wherein the transducer comprises a converter housing (100) fixed on the inlet and outlet tube section (11, 12).

9. Transducer as claimed in one of the previous claims, wherein additional masses (101, 102), which are fixed on the measuring tube (10), are provided.

10. Transducer as claimed in one of the previous claims, wherein the transducer comprises a counter-vibrator (20) aligned with the measuring tube (10) and fixed on the measuring tube (10) on the inlet side and on the outlet side.

11. Transducer as claimed in the previous claim, wherein grooves (201, 202) formed in the counter-vibrator (20) are provided.

12. Transducer as claimed in Claim 10 or 11, wherein the torsional resonance frequency of the counter-vibrator (20) is set in such a way that it is essentially equal to the torsional vibration frequency at which the measuring tube (10) is excited during operation.

13. Transducer as claimed in one of the Claims 1 to 5 or 8 to 12, wherein the two rotational bodies are additionally directly coupled with one another, particularly in a rigid or elastic manner.

14. Transducer as claimed in one of the previous claims, wherein during the operation of the transducer the measuring tube (10) is excited to perform flexural vibrations in addition to the torsional vibrations, particularly at the same time as the flexural vibrations, particularly at a flexural vibration frequency, f_{excB}, corresponding to a lowest natural flexural resonance frequency of the measuring tube (10) in such a way that it bends essentially according to a natural flexural vibration form.

15. Transducer as claimed in one of the previous claims, wherein the measuring tube is the only measuring tube of the transducer.

## Revendications

1. Transducteur de mesure du type à vibrations pour un fluide s'écoulant dans une conduite, lequel transducteur comprend :
- un tube de mesure (10), notamment unique, pour l'essentiel droit, vibrant en fonctionnement à une fréquence de vibration de tube de mesure prédéfinissable, lequel tube est destiné à guider le fluide,
-- le tube de mesure (10) communiquant avec la conduite à travers un segment de tube d'entrée (11) débouchant dans une extrémité d'entrée (11#) du tube de mesure (10) et à travers un segment de tube de sortie (12) débouchant dans une extrémité de sortie (12#) du tube de mesure (10)
-- et le tube de mesure (10), le segment de tube d'entrée et le segment de tube de sortie étant alignés entre eux et par rapport à un axe longitudinal imaginaire (L),
- un circuit d'excitation (40) agissant sur le tube de mesure (10), destiné à faire entrer en vibrations le tube de mesure (10) de telle sorte que le tube de mesure (10) exécute, notamment pour la création de forces de cisaillement dans le fluide, au moins temporairement des vibrations de torsion autour de l'axe longitudinal de tube de mesure imaginaire (L) à une fréquence de vibration de torsion, f_{excT'},
- un circuit de capteur (50) destiné à la mesure des vibrations du tube de mesure (10), ainsi que
- un amortisseur de vibrations de torsion (60) fixé sur le tube de mesure (10) qui, en fonctionnement, est fait entré en vibrations au moins partiellement de manière déphasée par rapport au tube de mesure (10) exécutant des vibrations de torsion,
- l'amortisseur de vibrations de torsion (60) comprenant un premier corps à masse tournante présentant un moment d'inertie prédéfinissable, lequel corps est couplé - par l'intermédiaire d'un premier corps à ressort de torsion présentant une rigidité à la torsion prédéfinissable - avec le tube de mesure (10), ainsi qu'un deuxième corps à masse tournante présentant un moment d'inertie prédéfinissable, lequel corps est couplé - par l'intermédiaire d'un deuxième corps à ressort de torsion présentant une rigidité à la torsion prédéfinissable - avec le tube de mesure (10).

2. Transducteur de mesure selon la revendication 1, pour lequel l'amortisseur de vibrations de torsion (60) est entraîné uniquement par le tube de mesure (10) vibrant, exécutant des vibrations de torsion.

3. Transducteur de mesure selon la revendication 1 ou 2, pour lequel l'amortisseur de vibrations de torsion (60) est fixé côté entrée et côté sortie sur le tube de mesure (10).

4. Transducteur de mesure selon l'une des revendications précédentes, pour lequel l'amortisseur de vibrations de torsion (60) présente une fréquence propre de torsion supérieure à 0,8 fois la fréquence de vibration du tube de mesure.

5. Transducteur de mesure selon l'une des revendications précédentes, pour lequel l'amortisseur de vibrations de torsion (60) présente une fréquence propre de torsion inférieure à 1,2 fois la fréquence de vibration du tube de mesure

6. Transducteur de mesure selon l'une des revendications précédentes, pour lequel l'amortisseur de vibrations de torsion (60) est formé au moyen d'un amortissement partiel côté entrée (61A, 61B) et au moyen d'un amortisseur partiel côté sortie (62A, 62B).

7. Transducteur de mesure selon la revendication précédente,
- pour lequel une fréquence de résonance de torsion, f₆₁, f₆₂, des amortisseurs partiels (61, 62) est réglée de telle sorte qu'elle est pour l'essentiel égale à la fréquence de vibration de torsion, à laquelle le tube de mesure (10) est excité pendant le fonctionnement ; et/ou
- pour lequel les deux amortisseurs partiels (61, 62) sont en forme de porte-à-faux et disposés dans le transducteur de mesure de telle sorte qu'un centre de gravité, M₆₁, de l'amortisseur partiel côté entrée et un centre de gravité, M₆₂, de l'amortisseur partiel côté sortie soient espacés du tube de mesure (10), notamment en alignement avec celui-ci.

8. Transducteur de mesure selon l'une des revendications précédentes, pour lequel le transducteur de mesure comprend un boîtier de convertisseur (100) fixé aux segments de tube d'entrée et de sortie (11, 12).

9. Transducteur de mesure selon l'une des revendications précédentes, pour lequel sont prévues des masses additionnelles (101, 102) fixées sur le tube de mesure (10).

10. Transducteur de mesure selon l'une des revendications précédentes, pour lequel le transducteur de mesure comprend un contre-vibrateur (20) aligné avec le tube de mesure (10) et fixé côté entrée et côté sortie sur le tube de mesure (10).

11. Transducteur de mesure selon la revendication précédente, pour lequel sont prévues des rainures (201, 202) formées dans le contre-vibrateur (20).

12. Transducteur de mesure selon la revendication 10 ou 11, pour lequel la fréquence de résonance de torsion du contre-vibrateur (20) est réglée de telle sorte qu'elle est pour l'essentiel égale à la fréquence de vibrations de torsion, à laquelle le tube de mesure (10) est excité pendant le fonctionnement.

13. Transducteur de mesure selon l'une des revendications 1 à 5 ou 8 à 12, pour lequel les deux corps tournants sont couplés en plus directement entre eux, notamment de façon rigide ou élastique.

14. Transducteur de mesure selon l'une des revendications précédentes, pour lequel le tube de mesure (10) est excité, pendant le fonctionnement du transducteur de mesure, en plus des vibrations de torsion, également en vibrations de flexion, notamment simultanément à celles-ci, notamment à une fréquence de vibration de flexion, f_{excB}, correspondant à une fréquence de résonance de flexion naturelle la plus basse du tube de mesure (10), de telle sorte qu'il vibre pour l'essentiel conformément à une forme de vibration de flexion naturelle.

15. Transducteur de mesure selon l'une des revendications précédentes, pour lequel le tube de mesure est l'unique tube de mesure du transducteur de mesure.
